# EUROPÄISCHE PATENTSCHRIFT

(11) **EP 2 538 363 B1**
(45) Veröffentlichungstag und Bekanntmachung des Hinweises auf die Patenterteilung: **13.04.2016**
(21) Anmeldenummer: 11171266.7
(22) Anmeldetag: 24.06.2011
(51) Int. Cl.: H04W 4/02, H04W 12/06, H04L 29/06, G01S 5/00

(54) **Verschlüsselte Übertragung von Satellitennavigationsdaten**
Encrypted transfer of satellite navigation data
Transmission verrouillée de données de navigation par satellite

(43) Veröffentlichungstag der Anmeldung: 26.12.2012
(73) Patentinhaber: Siemens Aktiengesellschaft, 80333 München (DE)
(72) Erfinder: Dombrowski, Sascha, 90475 Nürnberg (DE); Jöhnßen, Oliver, 91058 Erlangen (DE)

(56) Entgegenhaltungen:
- EP-A1- 1 605 665
- EP-A1- 1 650 671
- EP-A1- 2 203 022
- WO-A1-2009/144534

## Beschreibung

Die Erfindung betrifft ein Verfahren zur Übertragung von Satellitennavigationsdaten an ein Verarbeitungsgerät, insbesondere ein Verfahren zur verschlüsselten Übertragung der Satellitennavigationsdaten. Aus dem Stand der Technik sind Empfänger für Satellitennavigationsdaten eines Satelliten-Navigationssystems bekannt, die beispielsweise über eine USB-Schnittstelle an einen Computer anschließbar sind. Diese dienen dazu, Signale des Satelliten-Navigationssystems zu empfangen und über eine Schnittstelle an einen Computer auszugeben. Die Satellitennavigationsdaten können dann auf dem Computer weiterbearbeitet werden.

EP 2 203 022 A1 beschreibt ein Verfahren beinhaltend die Bestimmung der Position eines mobilen Geräts (1) durch von einem Satellitennavigationssystem ausgesendeten Signalen. Das Gerät befindet sich in einer geografischen Zone von einer Basisstation. Die Positionsdaten des Gerätes werden auf einen Server über die Station übertragen. Zell-Positionsinformationen werden an den Server übertragen. Es erfolgt eine Überprüfung, ob die Position des Geräts mit den Informationen über die Zelle übereinstimmt.

EP 1 605 665 A1 beschreibt eine Informationsverarbeitungsvorrichtung zur Bestimmung, ob ein vorbestimmter Inhalt an eine Empfangsvorrichtung, die mit einem Netzwerk verbunden ist, gesendet wird, wobei eine Antwortzeit auf ein vorbestimmtes Kommando berücksichtigt wird.

EP 1 650 671 beschreibt eine Informationsverarbeitungsvorrichtung mit einer Befehlssendeeinrichtung zum Senden eines Befehls zum Anfordern einer Antwort auf eine Empfangsvorrichtung nachdem Authentifizierungsdaten in Übereinstimmung mit gemeinsamen Daten der Empfangsvorrichtung erzeugt worden sind, mit Authentifizierungsmittel zum Authentifizieren der Empfangsvorrichtung in Übereinstimmung mit einer erwarteten Wert, der auf der Grundlage der gemeinsamen Daten und die Authentisierungsdaten an die Empfangsvorrichtung erzeugt wird, mit Messmittel zum Messen einer Antwortzeit, die die Aufnahmevorrichtung zur Beantwortung des Befehl benötigt, und mit Beurteilungsmittel zum Beurteilen, ob die Datenübertragung an die Empfangsvorrichtung erteilt wird oder nicht, in Übereinstimmung mit einem Authentifizierungsergebnis von der Authentifizierungsvorrichtung und der durch die Messmittel gemessenen Reaktionszeit.

Demgegenüber liegt der Erfindung die Aufgabe zugrunde, ein verbessertes Verfahren zur Übertragung von Satellitennavigationsdaten eines Satelliten-Navigationssystems, einen verbesserten Empfänger für Signale eines Satelliten-Navigationssystems, ein verbessertes Computerprogrammprodukt und ein verbessertes System aus einem Empfänger und einem Verarbeitungsgerät zu schaffen.

Die der Erfindung zugrunde liegenden Aufgaben werden mit den Merkmalen der unabhängigen Patentansprüche gelöst. Ausführungsformen der Erfindung sind in den abhängigen Patentansprüchen gegeben.

Die Erfindung betrifft ein Verfahren zur Überprüfung von Satellitennavigationsdaten. Zunächst wird eine Mobilfunkverbindung zwischen einem Nutzergerät und einem Server aufgebaut. Zum Aufbau der Mobilfunkverbindung werden ein Mobilfunkgerät und ein Mobilfunknetz verwendet. Das Nutzergerät und das Mobilfunkgerät befinden sich in einer Zelle des Mobilfunknetzes. Mit anderen Worten ist die Distanz zwischen dem Nutzergerät und dem Mobilfunkgerät so gering, dass sie sich in einer Zelle des Mobilfunknetzes befinden.

Die Satellitennavigationsdaten werden über die Mobilfunkverbindung von dem Nutzergerät über das Mobilfunkgerät zum Server übertragen. Die Satellitennavigationsdaten spezifizieren dabei einen Ort des Nutzergerätes. Zusätzlich wird ein Identifikator der Zelle an den Server übertragen. Der Identifikator spezifiziert dabei die Zelle des Mobilfunknetzes, indem sich das Mobilfunkgerät und das Nutzergerät befinden. Der Identifikator kann beispielsweise eine sogenannte Cell ID sein. Nun wird von dem Server überprüft, ob der Ort in der Zelle liegt. Dies geschieht unter Verwendung der Satellitennavigationsdaten und des Identifikators. Beispielsweise kann in dem Server eine Datenbank abgelegt sein, in der die Satellitennavigationsdaten einem Identifikator zugeordnet sind. So kann beispielsweise überprüft werden, ob der in der Datenbank den übertragenen Satellitennavigationsdaten zugeordnete Identifikator mit dem übertragenen Identifikator übereinstimmt. Bei überlappenden Zellen können die Einträge in der Datenbank des Servers für bestimmte Satellitennavigationsdaten, die Orte in diesen Überlappungsbereichen spezifizieren, mehr als ein zulässiger Identifikator gespeichert sein.

Die Überprüfung der Satellitennavigationsdaten unter Verwendung des Identifikators dient dazu, dass die Satellitennavigationsdaten nicht von einem Nutzer oder Angreifer verändert werden können. Eine Veränderung der Satellitennavigationsdaten würde dadurch registriert werden, dass die Satellitennavigationsdaten nicht mehr zu einem Ort gehören, der in einer Zelle liegt, die dem übertragenen Identifikator zugeordnet ist.

Wenn nun also die Satellitennavigationsdaten einen Ort spezifizieren, der in der Zelle liegt, die durch den Identifikator spezifiziert wird, kann sich der Server also sicher sein, dass die empfangenen Satellitennavigationsdaten wirklich den Ort spezifizieren, in dem sich das Nutzergerät befindet und nicht durch einen Dritten verändert wurden.

Falls der Ort in der Zelle liegt, können ortsspezifische Daten von dem Server an das Nutzergerät übertragen werden. Beispielsweise können Daten eines Computerprogramms an das Nutzergerät übertragen werden. Diese Daten können beispielsweise an den Ort des Nutzergerätes angepasst sein, sodass eine lokalisierte Version, die optimal auf den Ort des Nutzergerätes abgestimmt ist, von dem Server an das Nutzergerät übertragen werden kann. Beispielsweise kann so direkt eine Version des Computerprogramms in der Landessprache übertragen werden. Außerdem ist es möglich, bestimmte Funktionen, die für das Nutzergerät an dem durch die Satellitennavigationsdaten spezifizierten Ort besonders wichtig sind, zu übertragen. So kann beispielsweise eine Automatisierungskomponente für den Betrieb in besonders heißen oder kalten Gegenden konfiguriert werden.

Nach Ausführungsformen der Erfindung umfasst das Verfahren ferner eine Anfrage nach einer Übertragung von Daten über die Mobilfunkverbindung durch das Nutzergerät. Es wird dann überprüft, ob die Daten an den Ort des Nutzergerätes übertragen werden dürfen, falls der Ort in der Zelle liegt. Falls die Überprüfung ergeben hat, dass die Daten an den Ort übertragen werden dürfen, werden die Daten an das Nutzergerät über die Mobilfunkverbindung übertragen.

Das Mobilfunkgerät kann beispielsweise ein Handy, ein Palm oder ein Blackberry sein. Das Mobilfunkgerät kann zum Beispiel einen Empfänger für die Satellitennavigationsdaten umfassen oder sich durch einen solchen Empfänger für Satellitennavigationsdaten erweitern lassen. Es ist auch möglich, dass sich der Empfänger für die Satellitennavigationsdaten in dem Nutzergerät befindet oder an das Nutzergerät angeschlossen ist. Dies können zum Beispiel sogenannte Dongles sein, die unter Verwendung einer Schnittstelle, zum Beispiel USB, mit dem Nutzergerät verbunden werden können.

Die Überprüfung, ob die Daten an den Ort des Nutzergerätes übertragen werden dürfen, beinhaltet zum Beispiel, dass eine Übertragung der Daten beispielsweise exportrechtliche Vorschriften entgegenstehen könnten, sodass eine Übertragung der Daten an den Ort des Nutzergerätes von dem Ort des Verarbeitungsgerätes aus nicht erlaubt ist. Die Daten können beispielsweise Daten eines Computerprogramms oder Daten einer Lizenz für ein Computerprogramm sein. Hierbei ist zum Beispiel denkbar, dass der Hersteller des Computerprogrammes bestimmte Länder von der Verwendung des Programmes ausschließen möchte oder sogar gesetzlich dazu verpflichtet ist, die Verwendung des Programmes in solchen Ländern auszuschließen. Wenn nun also das Nutzergerät die Anfrage nach der Übertragung der Daten stellt, bestimmt das Verarbeitungsgerät, ob die Daten an den Ort des Nutzergerätes übertragen werden sollen. Wenn eine Übertragung der Daten Vorschriften entgegenstehen oder eine Übertragung aus einem anderen Grund an den Ort des Nutzergeräts nicht erfolgen soll, werden die Daten nicht an das Nutzergerät übertragen. Falls die Daten ein Computerprogramm sind, erfolgt also keine Übertragung des Computerprogramms an das Nutzergerät. Falls die Daten eine Lizenz für ein Computerprogramm sind, erfolgt keine Übertragung der Lizenz an das Nutzergerät, sodass das Computerprogramm nicht ausgeführt werden kann.

Wenn die Überprüfung ergeben hat, dass die Daten übertragen werden dürfen, werden die Daten an das Nutzergerät durch das Verarbeitungsgerät übertragen. Falls die Daten ein Computerprogramm sind, wird also das Computerprogramm an das Nutzergerät übertragen. Falls die Daten eine Softwarelizenz eines Computerprogramms sind, wird die Softwarelizenz an das Nutzergerät übertragen. Mit der Softwarelizenz kann dann das Nutzergerät das Computerprogramm ausführen. Das Computerprogramm muss in diesem Falle noch an das Nutzergerät übertragen werden, falls es nicht schon auf dem Nutzergerät installiert ist. Eine Übertragung des Computerprogramms kann in diesem Falle nach Ausführungsformen der Erfindung oder aber auch in einer anderen Weise erfolgen. Beispielsweise kann das Computerprogramm an dem Nutzergerät von einem Datenträger wie einer CD oder einer DVD oder einer Speicherkarte installiert werden. Es ist auch möglich, dass das Computerprogramm durch ein anderes Verfahren von dem Verarbeitungsgerät oder von einem anderen Gerät heruntergeladen wird.

Nach Ausführungsformen der Erfindung sind die Daten Daten eines ausführbaren Computerprogramms. Die Daten können beispielsweise auch gepackt sein. Außerdem kann es sich lediglich um Installationsdateien für das Computerprogramm handeln. Es ist auch möglich, dass die Daten nur die Lizenz für das ausführbare Programm umfassen. Das Computerprogramm wird in diesem Falle getrennt von der Lizenz an den Empfänger ausgeliefert. Diese Auslieferung kann beispielsweise über das Internet, nach Ausführungsformen der Erfindung, über ein Speichermedium oder über ein Netzwerk erfolgen.

Nach Ausführungsformen der Erfindung wird durch den Server eine Anfrage zur Ausführung eines Computerprogramms empfangen. Die Satellitennavigationsdaten werden dann von dem Nutzergerät an den Server übertragen. Beispielsweise kann es sich bei dem Nutzergerät hier um einen Computer, ein programmierbares Gerät, einen Laptop, einen Palm, einen Handheld, ein Handy, einen Organizer, ein Panel, ein HMI-Panel oder ein anderes Gerät zur Ausführung von Computerprogrammen handeln. Der Server prüft, ob das Computerprogramm an einem durch die Satellitennavigationsdaten spezifizierten Ort ausgeführt werden darf. Das Computerprogramm wird nur dann ausgeführt, wenn es an dem Ort ausgeführt werden darf. Somit wird verhindert, dass das Computerprogramm zunächst an einem Ort installiert wird, an dem eine Installation des Computerprogramms erlaubt ist und anschließend das Nutzergerät an einen Ort transportiert wird, wo ein Betrieb des Nutzergerätes mit dem Computerprogramm nicht erlaubt ist.

Beispielsweise kann der Server bei jedem Start des Computerprogrammes überprüfen, ob das Programm an dem Ort, wo sich das Nutzergerät zu dem Startzeitpunkt befindet, ausgeführt werden darf.

Nach Ausführungsformen der Erfindung wird ein Funktionsumfang, der für das Computerprogramm an dem Ort zulässig ist, bestimmt. Die Konfiguration des Computerprogramms wird dann geändert. Nach der Änderung der Konfiguration des Computerprogramms umfasst eben diese Konfiguration den bestimmten Funktionsumfang.

Dies ist beispielsweise vorteilhaft, wenn bestimmte Funktionen der Computersoftware zunächst nicht freigeschaltet sind und später freigeschaltet werden sollen. Dies kann beispielsweise dann der Fall sein, wenn der Benutzer weitere Funktionen des Computerprogramms hat oder wenn aus einem anderen Grund der Funktionsumfang an dem Ort des Nutzergerätes erweitert oder eingeschränkt werden soll.

Nach Ausführungsformen der Erfindung vergleicht der Server eine Antwortzeit des Nutzergeräts auf eine Anfrage mit einem Maximalwert. Die Anfrage kann in diesem Fall beispielsweise ein sogenanntes Ping-Signal sein. Die Daten werden nur dann an das Nutzergerät übertragen, wenn die Antwortzeit unterhalb des Maximalwerts liegt oder wenn die Antwortzeit gleich dem Maximalwert ist. Der Maximalwert kann beispielsweise eine halbe Sekunde oder auch einige Sekunden sein. Maximalwerte können auch im Milli- oder Mikrosekundenbereich liegen.

Durch diese maximale Antwortzeit kann verhindert werden, dass eine Schnittstelle geteilt wird, an der das Mobilfunkgerät betrieben wird. Dies könnte beispielsweise über das Internet oder ein Intranet möglich sein. Dies könnte dazu führen, dass der Identifikator von dem Mobilfunkgerät der an einem Ort betrieben wird, der von dem Server als zulässig erkannt werden würde, durch ein Nutzergerät in einem Land verwendet wird, das von dem Server als ein unzulässiges Land erkannt werden würde. Mit anderen Worten befinden sich in diesem Falle das Mobilfunkgerät und das Nutzergerät an unterschiedlichen Orten, da das Mobilfunkgerät nicht direkt mit dem Nutzergerät, sondern mit einem anderen Nutzergerät verbunden ist. Wenn die Antwortzeit mit dem Maximalwert verglichen wird, kann ein solcher Missbrauch unterbunden werden, weil der Maximalwert durch den vergrößerten Signalisierungsaufwand überschritten werden würde.

In einem anderen Aspekt betrifft die Erfindung eine Automatisierungskomponente für ein Automatisierungsnetzwerk mit Mitteln zum Aufbau einer Mobilfunkverbindung zwischen der Automatisierungskomponente und einem Server. Zum Aufbau der Mobilfunkverbindung werden ein Mobilfunkgerät und ein Mobilfunknetz verwendet. Die Automatisierungskomponente und das Mobilfunkgerät befinden sich in einer Zelle des Mobilfunknetzes. Beispielsweise kann das Mobilfunkgerät über eine drahtgebundene oder über eine drahtlose Verbindung mit der Automatisierungskomponente verbunden sein. Dabei ist zu beachten, dass die Reichweite der Verbindung ausreichend gering ist, damit sich das Mobilfunkgerät und die Automatisierungskomponente in der gleichen Zelle des Mobilfunknetzes befinden. Das Mobilfunkgerät kann auch in die Automatisierungskomponente integriert sein. Dies kann beispielsweise so realisiert werden, dass sich eine Chipkarte in einem Chipkartenleser der Automatisierungskomponente befindet, die Zugangsdaten für das Mobilfunknetzwerk umfasst. Durch Auslesen der Zugangsdaten kann dann die Automatisierungskomponente unter Verwendung des Mobilfunkgerätes eine Verbindung mit dem Mobilfunknetz aufbauen. In diesem Falle umfasst das Mobilfunkgerät den Chipkartenleser und eine Prozessor, der zum Auslesen der Daten und zur Einwahl in das Mobilfunknetz unter Verwendung der ausgelesenen Daten ausgebildet ist.

Außerdem umfasst die Automatisierungskomponente Mittel zur Übertragung von Satellitennavigationsdaten über die Mobilfunkverbindung über das Mobilfunkgerät zum Server. Die Satellitennavigationsdaten spezifizieren einen Ort der Automatisierungskomponente. Die Satellitennavigationsdaten können beispielsweise durch einen Empfänger für Satellitennavigationsdaten empfangen werden, der in die Automatisierungskomponente integriert ist. Alternativ dazu kann das Mobilfunkgerät einen solchen Empfänger aufweisen oder aber ein solcher Empfänger wird über eine Schnittstelle der Automatisierungskomponente mit der Automatisierungskomponente verbunden, zum Beispiel USB.

Außerdem umfasst die Automatisierungskomponente Mittel zur Übertragung eines Identifikators der Zelle an den Server. Der Identifikator wird an den Server über die Mobilfunkverbindung übertragen. Der Server überprüft die von der Automatisierungskomponente empfangenen Satellitennavigationsdaten und vergleicht sie mit dem Identifikator. So werden die Satellitennavigationsdaten im Hinblick auf mögliche Fälschungen überprüft. Gefälschte Satellitennavigationsdaten könnten einen Ort spezifizieren, der sich nicht innerhalb der durch den Identifikator spezifizierten Zelle des Mobilfunknetzes befindet.

In einem weiteren Aspekt betrifft die Erfindung einen Server mit Mitteln zum Aufbau einer Mobilfunkverbindung zwischen einem Nutzergerät, wie zum Beispiel einer Automatisierungskomponente, und dem Server. Zum Aufbau der Mobilfunkverbindung wird ein Mobilfunkgerät und ein Mobilfunknetz verwendet. Das Nutzergerät und das Mobilfunkgerät befinden sich in einer Zelle des Mobilfunknetzes. Der Server umfasst außerdem Mittel zum Empfang von Satellitennavigationsdaten über die Mobilfunkverbindung von dem Nutzergerät über das Mobilfunkgerät. Die Satellitennavigationsdaten spezifizieren einen Ort des Nutzergerätes.

Der Server umfasst außerdem Mittel zum Empfang eines Identifikators der Zelle. Außerdem umfasst der Server Mittel zur Überprüfung, ob der Ort in der Zelle liegt, unter der Verwendung des Identifikators.

In noch einem weiteren Aspekt betrifft die Erfindung ein Computerprogrammprodukt mit durch einen Prozessor ausführbaren Instruktionen, wobei die Instruktionen bei Ausführung ein Nutzergerät zur Durchführung eines Verfahrens nach einem der Ansprüche 1 bis 7 veranlassen.

Außerdem betrifft die Erfindung ein Computerprogrammprodukt mit durch einen Prozessor ausführbaren Instruktionen, wobei die Instruktionen bei Ausführung einen Server zur Durchführung eines Verfahrens nach Ausführungsformen der Erfindung veranlassen.

Das Computerprogrammprodukt kann aus zwei Computerprogrammproduktteilen bestehen, die zum Teil durch den Server und zu einem anderen Teil durch das Nutzergerät ausgeführt werden. Das Nutzergerät kann beispielsweise eine Automatisierungskomponente sein.

In noch einem weiteren Aspekt betrifft die Erfindung ein System aus einem Nutzergerät und einem Server, wobei das Nutzergerät und der Server zur Durchführung eines Verfahrens nach Ausführungsformen der Erfindung ausgebildet sind.

Nachfolgend werden Ausführungsformen der Erfindung anhand der Figuren näher erläutert. Es zeigen:
- Figur 1: eine schematische Ansicht eines Systems aus einem Verarbeitungsgerät, einem Nutzergerät und einem Empfänger;
- Figur 2: ein Flussdiagramm eines Verfahrens nach Ausführungsformen der Erfindung.

Elemente der nachfolgenden Figuren werden mit denselben Bezugszeichen gekennzeichnet, wenn die Funktion des Elementes identisch ist.

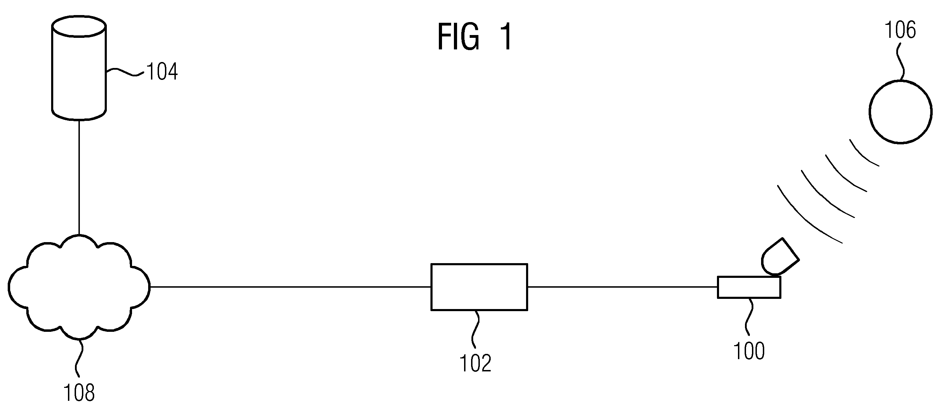

Figur 1 ist eine schematische Ansicht eines Systems aus einem Nutzergerät 100, einem Mobilfunkgerät 102 und einem Server 104.

Das Nutzergerät 100 ist mit dem Server 104 über das Mobilfunkgerät 102 und ein Mobilfunknetz 108 verbunden. Das Mobilfunkgerät 102 und das Nutzergerät 100 befinden sich in einer Zelle des Mobilfunknetzes 108. Das Nutzergerät 100 umfasst einen Empfänger für Satellitennavigationsdaten eines Satelliten-Navigationssystems 106. Alternativ dazu kann der Empfänger für die Satellitennavigationsdaten auch von dem Mobilfunkgerät 102 umfasst sein. Eine weitere Alternative ist der Anschluss eines externen Empfängers für die Satellitennavigationsdaten an das Mobilfunkgerät 102 oder an das Nutzergerät 100.

Die Satellitennavigationsdaten werden von dem Mobilfunkgerät 102 über das Mobilfunknetz 108 an den Server 104 übertragen. Zusätzlich wird ein Identifikator der Zelle, in der sich das Mobilfunkgerät 102 und das Nutzergerät 100 befinden, über das Mobilfunknetz 108 an den Server 104 übertragen. Der Server 104 überprüft nun, ob die Satellitennavigationsdaten einen Ort spezifizieren, der in der durch den Identifikator spezifizierten Zelle liegt. Falls der Ort in der Zelle liegt, kann davon ausgegangen werden, dass die Satellitennavigationsdaten nicht manipuliert werden und der durch die Satellitennavigationsdaten spezifizierte Ort mit dem wirklichen Ort des Nutzergerätes 100 übereinstimmt.

Falls der durch die Satellitennavigationsdaten spezifizierte Ort nicht in der durch den Identifikator spezifizierten Zelle des Mobilfunknetzes 108 liegt, wurden die Satellitennavigationsdaten durch einen Benutzer oder einen Störer manipuliert oder geändert. In diesem Falle findet keine Datenübertragung von dem Server 104 an das Nutzergerät 100 über das Mobilfunkgerät 102 statt.

Falls der Ort in der Zelle liegt, können ortsspezifische Daten von dem Server 104 an das Nutzergerät 100 übertragen werden. Beispielsweise können Daten eines Computerprogramms an das Nutzergerät 100 übertragen werden. Diese Daten können beispielsweise an den Ort des Nutzergerätes 100 angepasst sein, sodass eine lokalisierte Version, die optimal auf den Ort des Nutzergerätes 100 abgestimmt ist, von dem Server an das Nutzergerät 100 übertragen werden kann. Beispielsweise kann so direkt eine Version des Computerprogramms in der Landessprache übertragen werden. Außerdem ist es möglich, bestimmte Funktionen, die für das Nutzergerät 100 an dem durch die Satellitennavigationsdaten spezifizierten Ort besonders wichtig sind, zu übertragen. So kann beispielsweise eine Automatisierungskomponente für den Betrieb in besonders heißen oder kalten Gegenden konfiguriert werden.

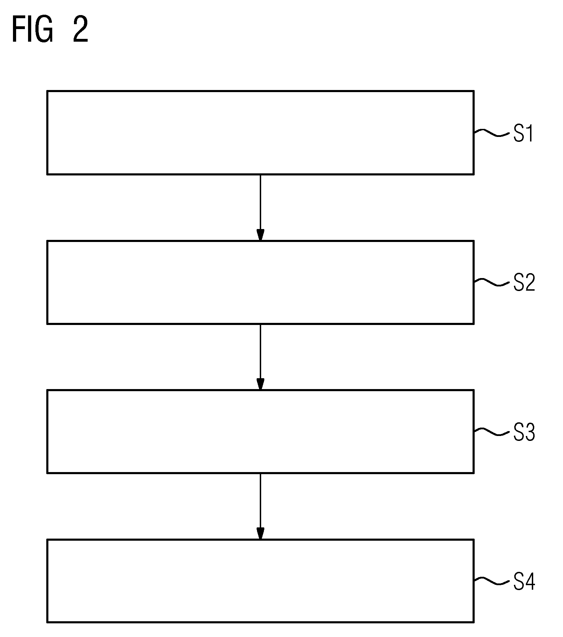

Figur 2 ist ein Flussdiagramm eines Verfahrens nach Ausführungsformen der Erfindung. In einem ersten Schritt S1 wird eine Mobilfunkverbindung zwischen einem Nutzergerät und einem Server aufgebaut. Beim Aufbau der Mobilfunkverbindung werden ein Mobilfunkgerät und ein Mobilfunknetz verwendet. Das Nutzergerät und das Mobilfunkgerät befinden sich in einer Zelle des Mobilfunknetzes.

In Schritt S2 werden Satellitennavigationsdaten über die Mobilfunkverbindung von dem Nutzergerät über das Mobilfunkgerät zum Server übertragen. Die Satellitennavigationsdaten spezifizieren einen Ort des Nutzergerätes. Die Satellitennavigationsdaten können beispielsweise durch einen Empfänger für Satellitennavigationsdaten von einem Satelliten-Navigationssystem empfangen worden sein. Dieser Empfänger kann sich in dem Mobilfunkgerät oder in dem Nutzergerät befinden. Alternativ dazu kann der Empfänger über eine Schnittstelle mit dem Mobilfunkgerät oder dem Nutzergerät verbunden sein.

In Schritt S3 wird ein Identifikator der Zelle an den Server von dem Mobilfunkgerät übertragen. Der Identifikator spezifiziert die Zelle, in der sich das Nutzergerät und das Mobilfunkgerät befinden. Beispielsweise kann es sich bei dem Identifikator um eine Zell-ID handeln. Diese Zell-ID wird nun in Schritt S4 dazu verwendet, zu überprüfen, ob der Ort in der Zelle liegt. Beispielsweise umfasst der Server eine Datenbank, in der für jede Zelle ein zulässiger Bereich von Orten angegeben ist, die in der Zelle liegen. Beispielsweise sind Bereiche in Form von Satellitennavigationsdaten angegeben. Die Adressdatenbank kann jede Zelle jedes Mobilfunknetzes der Welt umfassen oder auch nur Zellen bestimmter Mobilfunknetze. In diesem Falle werden auch nur Orte überprüft, die in solchen Netzen liegen. Alternativ kann auch lediglich ein Teil des Identifikators für die Zelle verwendet werden. Beispielsweise der Teil des Identifikators verwendet wird, der das Land bezeichnet, in dem die Zelle liegt. Somit kann eine Überprüfung durchgeführt werden, ob die Satellitennavigationsdaten in dem Land liegen, in dem auch die Zelle liegt, die durch den Identifikator spezifiziert wurde. Eine solche Auflösung ist nicht so genau wie eine zellspezifische, jedoch kann durch eine solche Auflösung erreicht werden, dass beispielsweise länderspezifische Versionen von Software an das Nutzergerät übertragen werden können.

Falls der übertragene Identifikator der Zelle nicht in der Datenbank des Servers vorhanden ist, kann eine Datenübertragung von dem Server an das Nutzergerät vermieden werden. Dies geschieht analog zu dem Fall, dass die Satellitennavigationsdaten nicht zu der Zelle gehören, die durch den Identifikator spezifiziert wird.

Falls die Satellitennavigationsdaten einen Ort spezifizieren, der in der Zelle liegt, können Daten an das Nutzergerät übertragen werden. Diese Daten können beispielsweise Daten eines Computerprogramms sein. Somit können regionalisierte Versionen des Computerprogramms leicht und einfach an das Nutzergerät übertragen werden, ohne dass Manipulationen der Satellitennavigationsdaten möglich sind.

## Patentansprüche

1. Verfahren zur Überprüfung von Satellitennavigationsdaten, wobei das Verfahren die folgenden Schritte umfasst:
Aufbau (S1) einer Mobilfunk-Verbindung zwischen einem Nutzergerät (100) und einem Server (104), wobei zum Aufbau der Mobilfunk-Verbindung ein Mobilfunkgerät (102) und ein Mobilfunknetz (108) verwendet werden, und wobei sich das Nutzergerät (100) und das Mobilfunkgerät (102) in einer Zelle des Mobilfunknetzes (108) befinden;
Übertragung (S2) der Satellitennavigationsdaten über die Mobilfunk-Verbindung von dem Nutzergerät (100) über das Mobilfunkgerät (102) zum Server (104), wobei die Satellitennavigationsdaten einen Ort des Nutzergeräts (100) spezifizieren,
Übertragung (S3) eines Identifikators der Zelle an den Server (104) ;
Überprüfung (S4) unter Verwendung des Identifikators, ob der Ort in der Zelle liegt;
Anfrage nach einer Übertragung von Daten über die Mobilfunk-Verbindung durch das Nutzergerät (100);
Überprüfung durch den Server (104), ob die Daten an den Ort des Nutzergeräts (100) übertragen werden dürfen, falls der Ort in der Zelle liegt;
Übertragung der Daten an das Nutzergerät (100) über die Mobilfunk-Verbindung, falls die Überprüfung ergeben hat, dass die Daten an den Ort übertragen werden dürfen, wobei der Server (104) eine Antwortzeit des Nutzergeräts (100) auf eine Anfrage mit einem Maximalwert vergleicht, wobei die Daten nur dann an das Nutzergerät (100) übertragen werden, wenn die Antwortzeit unterhalb des Maximalwerts liegt oder wenn die Antwortzeit gleich dem Maximalwert ist.

2. Verfahren nach Anspruch 1, wobei die Daten Daten eines ausführbaren Computerprogramms sind.

3. Verfahren nach einem der vorhergehenden Ansprüche, wobei das Verfahren ferner die folgenden Schritte umfasst:
Übertragung einer Anfrage zur Ausführung eines Computerprogramms vom Nutzergerät (100) an den Server (104);
Überprüfung durch den Server (104) , ob das Computerprogramm an dem Ort ausgeführt werden darf;
Ausführung des Computerprogramms, wenn es an dem Ort ausgeführt werden darf.

4. Verfahren nach Anspruch 3, wobei zusätzliche Überprüfungen, ob das Computerprogramm an dem Ort ausgeführt werden darf, in regelmäßigen Abständen während der Ausführung des Computerprogramms erfolgen.

5. Verfahren nach einem Ansprüche 3 oder 4, wobei das Verfahren ferner die folgenden Schritte umfasst:
Bestimmung eines Funktionsumfangs, der für das Computerprogramm an dem Ort zulässig ist;
Änderung der Konfiguration des Computerprogramms, wobei nach der Änderung der Konfiguration das Computerprogramm den bestimmten Funktionsumfang umfasst.

6. Automatisierungskomponente für ein Automatisierungsnetzwerk mit:
Mitteln zum Aufbau einer Mobilfunk-Verbindung zwischen der Automatisierungskomponente und einem Server (104), wobei zum Aufbau der Mobilfunk-Verbindung ein Mobilfunkgerät (102) und ein Mobilfunknetz (108) verwendet werden, und wobei sich die Automatisierungskomponente und das Mobilfunkgerät (102) in einer Zelle des Mobilfunknetzes (108) befinden;
Mitteln zur Übertragung von Satellitennavigationsdaten über die Mobilfunk-Verbindung über das Mobilfunkgerät (102) zum Server (104), wobei die Satellitennavigationsdaten einen Ort der Automatisierungskomponente spezifizieren;
Mitteln zur Übertragung eines Identifikators der Zelle an den Server (104);
Mitteln zum Senden einer Anfrage nach einer Übertragung von Daten über die Mobilfunk-Verbindung;
Mitteln zum Empfang der Daten über die Mobilfunk-Verbindung.

7. Server (104) mit:
Mitteln zum Aufbau einer Mobilfunk-Verbindung zwischen einem Nutzergerät (100) und dem Server (104), wobei zum Aufbau der Mobilfunk-Verbindung ein Mobilfunkgerät (102) und ein Mobilfunknetz (108) verwendet werden, und wobei sich das Nutzergerät (100) und das Mobilfunkgerät (102) in einer Zelle des Mobilfunknetzes (108) befinden;
Mitteln zum Empfang von Satellitennavigationsdaten über die Mobilfunk-Verbindung von dem Nutzergerät (100) über das Mobilfunkgerät (102), wobei die Satellitennavigationsdaten einen Ort des Nutzergeräts (100) spezifizieren;
Mitteln zum Empfang eines Identifikators der Zelle;
Mitteln zur Überprüfung unter Verwendung des Identifikators, ob der Ort in der Zelle liegt;
Mitteln zum Empfang einer Anfrage nach einer Übertragung von Daten über die Mobilfunk-Verbindung;
Mitteln zur Überprüfung, ob die Daten an den Ort des Nutzergeräts (100) übertragen werden dürfen, falls der Ort in der Zelle liegt;
Mitteln zur Übertragung der Daten an das Nutzergerät (100) über die Mobilfunk-Verbindung, falls die Überprüfung ergeben hat, dass die Daten an den Ort übertragen werden dürfen, wobei der Server (104) dazu ausgebildet ist, eine Antwortzeit des Nutzergeräts (100) auf eine Anfrage mit einem Maximalwert zu vergleichen, wobei die Daten nur dann an das Nutzergerät (100) übertragen werden, wenn die Antwortzeit unterhalb des Maximalwerts liegt oder wenn die Antwortzeit gleich dem Maximalwert ist.

8. Computerprogrammprodukt mit durch einen Prozessor ausführbaren Instruktionen, wobei die Instruktionen bei Ausführung einen Server (104) und ein Nutzergerät (100) zur Durchführung eines Verfahrens nach einem der Ansprüche 1-5 veranlassen.

9. System aus einem Nutzergerät (100) und einem Server (104), wobei das Nutzergerät (100) und der Server (104) zur Durchführung eines Verfahrens nach einem der Ansprüche 1-5 ausgebildet sind.

## Claims

1. Method for checking satellite navigation data, wherein the method comprises the following steps:
setting up (S1) a mobile radio connection between a user device (100) and a server (104), wherein to set up the mobile radio connection a mobile radio device (102) and a mobile radio network (108) are used, and wherein the user device (100) and the mobile radio device (102) are located in a cell of the mobile radio network (108);
transferring (S2) the satellite navigation data about the mobile radio connection from the user device (100) via the mobile radio device (102) to the server (104), wherein the satellite navigation data specifies a location of the user device (100),
transferring (S3) an identifier of the cell to the server (104);
checking (S4), using the identifier, whether the location lies in the cell;
request by the user device (100) to transfer data about the mobile radio connection;
check by the server (104) as to whether the data may be transferred to the location of the user device (100), if the location lies in the cell;
transferring the data to the user device (100) via the mobile radio connection, if the check has shown that the data may be transferred to the location, wherein the server (104) compares a response time of the user device (100) to a request with a maximum value, wherein the data is transferred to the user device (100) only if the response time lies below the maximum value or if the response time is equal to the maximum value.

2. Method according to claim 1, wherein the data is data of an executable computer program.

3. Method according to one of the preceding claims, wherein the method further comprises the following steps:
transferring a request to execute a computer program from the user device (100) to the server (104);
check by the server (104) as to whether the computer program may be executed at the location;
executing the computer program, if it may be executed at the location.

4. Method according to claim 3, wherein additional checks are made at regular intervals during the execution of the computer program as to whether the computer program may be executed at the location.

5. Method according to one of claims 3 or 4, wherein the method further comprises the following steps:
determining a functional scope which is permissible for the computer program at the location;
changing the configuration of the computer program, wherein after the configuration is changed the computer program comprises the determined functional scope.

6. Automation component for an automation network with:
means for setting up a mobile radio connection between the automation component and a server (104), wherein to set up the mobile radio connection a mobile radio device (102) and a mobile radio network (108) are used, and wherein the automation component and the mobile radio device (102) are located in a cell of the mobile radio network (108);
means for transferring satellite navigation data about the mobile radio connection via the mobile radio device (102) to the server (104), wherein the satellite navigation data specifies a location of the automation component;
means for transferring an identifier of the cell to the server (104);
means for sending a request to transfer data about the mobile radio connection;
means for receiving the data about the mobile radio connection.

7. Server (104) with:
means for setting up a mobile radio connection between a user device (100) and the server (104), wherein to set up the mobile radio connection a mobile radio device (102) and a mobile radio network (108) are used, and wherein the user device (100) and the mobile radio device (102) are located in a cell of the mobile radio network (108);
means for receiving satellite navigation data about the mobile radio connection from the user device (100) via the mobile radio device (102), wherein the satellite navigation data specifies a location of the user device (100);
means for receiving an identifier of the cell;
means for checking, using the identifier, whether the location lies in the cell;
means for receiving a request to transfer data about the mobile radio connection;
means for checking whether the data may be transferred to the location of the user device (100), if the location lies in the cell;
means for transferring the data to the user device (100) via the mobile radio connection, if the check has shown that the data may be transferred to the location, wherein the server (104) is designed to compare a response time of the user device (100) to a request with a maximum value, wherein the data is transferred to the user device (100) only if the response time lies below the maximum value or if the response time is equal to the maximum value.

8. Computer program product with instructions which can be executed by a processor, wherein during execution the instructions cause a server (104) and a user device (100) to perform a method according to one of claims 1-5.

9. System comprising a user device (100) and a server (104), wherein the user device (100) and the server (104) are designed to perform a method according to one of claims 1-5.

## Revendications

1. Procédé de contrôle de données de navigation par satellite, le procédé comprenant les stades suivants :
établissement (S1) d'une liaison de radiocommunication mobile entre un appareil (100) utilisateur et un serveur (104) en utilisant pour l'établissement de la liaison de radiocommunication mobile un appareil (102) de radiocommunication mobile et un réseau (108) de radiocommunication mobile, l'appareil (100) utilisateur et l'appareil (102) de radiocommunication mobile se trouvant dans une cellule du réseau (108) de radiocommunication mobile ;
transmission (S2) des données de navigation par satellite, par l'intermédiaire de la liaison de radiocommunication mobile de l'appareil (100) utilisateur au serveur (104) par l'intermédiaire de l'appareil (102) de radiocommunication mobile, les données de navigation par satellite précisant un emplacement de l'appareil (100) utilisateur,
transmission (S3) d'un identificateur de la cellule au serveur (104),
contrôle (S4) en utilisant l'identificateur du point de savoir si l'emplacement est dans la cellule,
Demande de transmission de données par l'intermédiaire de la liaison de radiocommunication mobile par l'appareil (100) utilisateur,
contrôle par le serveur (104) du point de savoir si les données sur l'emplacement de l'appareil (100) utilisateur peuvent être transmises dans le cas où l'emplacement est dans la cellule,
transmission des données à l'appareil (100) utilisateur par l'intermédiaire de la liaison de radiocommunication mobile, si le contrôle a donné que les données sur l'emplacement peuvent être transmises, le serveur (104) comparant un temps de réponse de l'appareil (100) utilisateur à une demande à une valeur maximum, les données n'étant transmises à l'appareil (100) utilisateur que si le temps de réponse est inférieur à la valeur maximum ou que si le temps de réponse est égal à la valeur maximum.

2. Procédé suivant la revendication 1, dans lequel les données sont des données d'un programme d'ordinateur pouvant être exécutées.

3. Procédé suivant l'une des revendications précédentes, dans lequel le procédé comprend en outre les stades suivants :
transmission d'une demande d'exécution d'un programme d'ordinateur de l'appareil (100) utilisateur au serveur (104),
contrôle par le serveur (104) du point de savoir si le programme d'ordinateur peut être exécuté à l'emplacement,
exécution du programme d'ordinateur s'il peut être exécuté à l'emplacement.

4. Procédé suivant la revendication 3, dans lequel on effectue, à des intervalles réguliers pendant l'exécution du programme d'ordinateur, des contrôles supplémentaires sur le point de savoir si le programme d'ordinateur peut être exécuté à l'emplacement.

5. Procédé suivant l'une des revendications 3 ou 4, dans lequel le procédé comprend en outre les stades suivants :
détermination d'un périmètre fonctionnel qui est admissible pour le programme d'ordinateur à l'emplacement,
modification de la configuration du programme d'ordinateur, celui-ci comprenant, après la modification de la configuration, le périmètre fonctionnel défini.

6. Elément d'automatisation pour un réseau d'automatisation comprenant :
des moyens d'établissement d'une liaison de radiocommunication mobile entre l'élément d'automatisation et un serveur (104) en utilisant, pour l'établissement de la liaison de radiocommunication mobile, un appareil (102) de radiocommunication mobile et un réseau (108) de radiocommunication mobile, et l'élément d'automatisation et
l'appareil (102) de radiocommunication mobile se trouvant dans une cellule du réseau (108) de radiocommunication mobile,
des moyens de transmission au serveur (104) de données de navigation par satellite par l'intermédiaire de la liaison de radiocommunication mobile par l'appareil (102) de radiocommunication mobile, les données de navigation par satellite précisant un emplacement de l'élément d'automatisation,
des moyens de transmission d'un identificateur de la cellule au serveur (104),
des moyens d'envoi d'une demande de transmission de données par la liaison de télécommunication mobile,
des moyens de réception des données par la liaison de radiocommunication mobile.

7. Serveur (104) comprenant :
des moyens d'établissement d'une liaison de radiocommunication mobile entre l'élément d'automatisation et un serveur (104) en utilisant, pour l'établissement de la liaison de radiocommunication mobile, un appareil (102) de radiocommunication mobile et un réseau (108) de radiocommunication mobile, et l'appareil (100) utilisateur et
l'appareil (102) de radiocommunication mobile se trouvant dans une cellule du réseau (108) de radiocommunication mobile,
des moyens de réception de données de navigation par satellite par l'intermédiaire de la liaison de radiocommunication mobile de l'appareil (100) utilisateur par un appareil (102) de radiocommunication mobile, les données de navigation par satellite précisant un emplacement de l'appareil (100) utilisateur,
des moyens de réception d'un identificateur de la cellule,
des moyens de contrôle en utilisant l'identificateur du point de savoir si l'emplacement est dans la cellule,
des moyens de réception d'une demande d'une transmission de données par la liaison de radiocommunication mobile,
des moyens de contrôle du point de savoir si les données sur l'emplacement de l'appareil (100) utilisateur peuvent être transmises dans le cas où l'emplacement est dans la cellule,
des moyens de transmission des données à l'appareil (100) utilisateur par l'intermédiaire de la liaison de radiocommunication mobile, si le contrôle a donné que les données sur l'emplacement peuvent être transmises, le serveur (104) étant constitué pour comparer un temps de réponse de l'appareil (100) utilisateur à une demande à une valeur maximum, les données n'étant transmises à l'appareil (100) utilisateur que si le temps de réponse est inférieur à la valeur maximum ou que si le temps de réponse est égal à la valeur maximum.

8. Produit de programme d'ordinateur ayant des instructions pouvant être exécutées par un processeur, les instructions faisant, lorsqu'elles sont exécutées, qu'un serveur (104) et un appareil (100) utilisateur effectuent un procédé suivant l'une des revendications 1 à 5.

9. Système composé d'un appareil (100) utilisateur et d'un serveur (104), l'appareil (100) utilisateur et le serveur (104) étant constitués pour effectuer un procédé suivant l'une des revendications 1 à 5.
